# FASCICULE DE BREVET EUROPEEN

(11) **EP 2 816 900 B1**
(45) Date de publication et mention de la délivrance du brevet: **25.04.2018**
(21) Numéro de dépôt: 13710492.3
(22) Date de dépôt: 20.02.2013
(51) Int. Cl.: A01N 65/08, A01N 65/28, A01N 65/24, A01N 65/00, A01N 43/90, A01N 31/02, A01N 31/04, A01N 49/00, A01N 27/00, A01N 25/04, A01P 13/00

(54) **DÉSHERBANT TOTAL DES ZONES NON AGRICOLES**
UMFASSENDE UNKRAUTBEKÄMPFUNG IN NICHT-LANDWIRTSCHAFTLICHEN BEREICHEN
TOTAL WEED CONTROL OF NON-AGRICULTURAL AREAS

(30) Priorité: 23.02.2012 FR 1200525
(43) Date de publication de la demande: 31.12.2014
(73) Titulaire: Osmobio, 22600 Loudeac (FR)
(72) Inventeur: LE VERGER, Jacques, 22600 Loudeac (FR)
(74) Mandataire: Ipside
(86) Numéro de dépôt international: PCT/FR2013/050350
(87) Numéro de publication internationale: WO 2013/124583

(56) Documents cités:
- WO-A1-00/51436
- WO-A1-97/16975
- WO-A2-99/53764
- WO-A2-2006/094126
- US-A- 5 998 335
- DATABASE WPI Week 201020 Thomson Scientific, London, GB; AN 2010-C30177 XP002678176, & JP 2010 047489 A (SDS BIOTECH CORP) 4 mars 2010 (2010-03-04) cité dans la demande
- VAUGHN & G F SPENCER S F: "Volatile monoterpenes as potential parent structures for new herbicides", WEED SCIENCE, WEED SCIENCE SOCIETY OF AMERICA, CHAMPAIGN, IL, US, vol. 41, 1 janvier 1993 (1993-01-01), pages 114-119, XP002107453, ISSN: 0043-1745

## Description

La présente invention concerne, en particulier, une composition destinée à désherber les zones non agricoles (ZNA), utilisable diluée dans l'eau et applicable sur la végétation. Une telle composition diluée est particulièrement adaptée pour un traitement des végétaux durant la période de mars à novembre.

Les ZNA particulièrement sensibles sont celles qui bordent les routes, et, les sociétés chargées de l'entretien des voiries recherchent en permanence des solutions efficaces pour un désherbage écologique. Ces sociétés abandonnent l'usage des herbicides classiques au profit d'un désherbage mécanique tel que le fauchage. Le fauchage n'est cependant pas toujours aisé à mettre en oeuvre en fonction de la configuration de la zone à traiter et le recours aux désherbants reste encore la seule solution possible dans beaucoup de situations.

Les désherbants sont généralement des formulations pulvérisables sur les plantes, occasionnant le plus souvent une contamination du milieu ambiant pendant leur application. De plus, les désherbants issus de la chimie de synthèse sont agressifs et provoquent une destruction aussi bien du système racinaire de la plante, que de ses voies aériennes.

Pour éviter cela, on recherche l'utilisation de produits qui permettent une action ciblée qui ne soient pas invasifs (ne s'introduisent pas dans toute la plante au travers de la sève par les racines), c'est-à-dire qui soient particulièrement efficaces sur les plantes à éradiquer, tout en restant inoffensifs sur les autres organismes vivants.

Pour éviter l'impact dû le plus souvent à l'utilisation de produits chimiques de synthèse toxiques, on peut avoir recours à l'utilisation d'herbicides à base de produits naturels. Dans ce cadre, on connaît par exemple, de la demande JP2010047489 une formulation d'herbicide mettant en oeuvre différentes huiles essentielles telles que de l'huile d'eucalyptus globulus. Il existe, cependant, un besoin d'améliorer la spécificité d'action de tels herbicides et d'améliorer l'efficacité pour l'éradication des plantes dites « mauvaises herbes » Le document WO 00/51436 A1 décrit l'utilisation d'huiles essentielles végétales en combinaison avec un tensioactif pour lutter contre les mauvaises herbes. Dans ce cadre et pour pallier à tout ou partie des inconvénients de l'états de l'art précité, selon un premier aspect, la présente invention concerne une composition herbicide pour un désherbage total des zones non agricoles, contenant une infusion aqueuse de plante de henné naturel dans une teneur de 14 à 18% exprimée en pourcentage massique par rapport au poids total de la composition, au moins un tensio-actif non ionique, et comprenant en outre les ingrédients suivants :

| | |
|---|---|
| au moins un oxyde terpénique | 40 à 50% |
| au moins un monoterpénol | 5 à 9% |
| au moins un monoterpène | 4 à 8% ; |

et
tel que la masse de henné naturel solide utilisé pour l'infusion représente au moins 2% du poids total de la composition.

Dans le cadre de l'invention le terme « oxyde terpénique » regroupe les terpènes, tels qu'ils sont classiquement définis dans la nomenclature des composés organiques, comprenant au moins une fonction éther oxyde.

De même, le terme « monoterpène » désigne un composé ainsi défini dans la nomenclature des composés organiques à l'exclusion des monoterpénols et le terme « monoterpénol » désigne un monoterpène comprenant au moins une fonction alcool.

Les trois classes de composés (oxyde terpénique, monoterpène et monoterpénol) seront désignées sous le terme générique « dérivés de terpènes ».

L'infusion de Henné naturel est obtenue à partir de Henné solide que l'on fait infuser pendant au moins 5 minutes : 200 g de solide pour 2 L d'eau potable portée à 70 - 80°C (le volume de l'infusion obtenu est de environ 1.25 L).

Les ingrédients qui composent la formulation selon l'invention sont des produits herbicides qui ne présentent pas de risques chroniques et très peu d'impacts pour la santé et l'environnement. En effet, les substances actives et les adjuvants de la composition selon l'invention sont entièrement disponibles à partir d'une matière première d'origine végétale, agricole et renouvelable, et sont par ailleurs totalement, naturellement et rapidement biodégradables. De plus, les ingrédients dans les plages de valeurs indiquées sont non toxiques en particulier pour l'homme et les animaux domestiques.

Les inventeurs ont découvert de manière tout à fait inattendue que la composition selon l'invention, avec les avantages listés précédemment, est également particulièrement efficace pour éliminer les mauvaises herbes. L'association de ces divers ingrédients démontre une action synergique, sélective et rapide sur les végétaux en vue de détruire les chloroplastes de leur système respiratoire et leur fonction photosynthétique. En outre, la composition herbicide selon l'invention est adaptée pour une destruction du système vasculaire des plantes indésirables et permet leur éradication à un stade précoce de leur développement.

Les inventeurs ont découvert de manière fortuite que les dérivés de terpène dans les teneurs telles qu'exposées précédemment dans le cadre de l'invention et en association avec le henné naturel permettaient, grâce à une action synergique, de détruire les mauvaises herbes. Le henné naturel contient des polyphénols, comme par exemple des dérivés de la coumarine ou de certains flavonoïdes. Les inventeurs ont montré que le henné naturel contient une quantité de polyphénols significative qui est dissoute dans l'infusion. Par ailleurs, les inventeurs ont mis en évidence que ces polyphénols augmentent l'efficacité des dérivés de terpène présents dans la composition pour la destruction des herbes indésirables. Grâce à une telle action synergique entre le henné naturel et ces dérivés de terpènes, la composition selon l'invention est particulièrement efficace.

Les flavonoïdes issus de l'infusion de henné naturel jouent deux rôles :
- ils fixent les monoterpènes à la surface des plantes traitées et augmentent de ce fait leur action herbicide dans le temps ; et
- ils induisent des interactions biochimiques directes au moyen de métabolites secondaires qui inhibent la croissance des végétaux.

L'activité inhibitrice des composés flavonoïques est due à leur structure moléculaire polyphénolique et isoprénique. Leurs molécules sont en effet capables de jouer un rôle dans les chaines d'oxydoréduction de modifier certaines réactions concernant la croissance, la respiration, la morphogénèse.

La composition offre en outre l'avantage de ne cibler que les espèces indésirables, et permet aussi d'avoir un spectre d'action considérablement large, puisqu'elle est par exemple capable de détruire aussi bien les plantes annuelles, que les plantes pérennes, vivace dicotylédones ou encore les graminées.

Alternativement, la présente invention concerne une composition herbicide pour un désherbage total des zones non agricoles, contenant de l'acide salicylique dans une teneur de 6 à 20% exprimée en pourcentage massique par rapport au poids total de la composition, au moins un tensio-actif non ionique, et comprenant en outre les ingrédients suivants :

| | |
|---|---|
| au moins un oxyde terpénique | 40 à 50% |
| au moins un monoterpénol | 5 à 9% |
| au moins un monoterpène | 4 à 8% |

La teneur en acide salicylique pouvant être avantageusement de 8 à 15%, voire de 9 à 12%. Le tensioactif non ionique pouvant être sélectionné parmi les esters de sucres. La nature du tensioactif non ionique utilisé est développée plus loin dans le texte de la description, dans le cadre de la présente invention.

De préférence, la composition d'herbicides selon l'invention comprend les ingrédients suivants dans les teneurs :

| | |
|---|---|
| au moins un oxyde terpénique | 43.0 à 48.5% |
| au moins un monoterpénol | 6.3 à 7.1% |
| au moins un monoterpène | 5.5 à 6.2%. |

La composition d'herbicides selon l'invention comprend avantageusement 45.0 à 47.0% d'oxyde terpénique, de 6.5 à 7.0% de monoterpénol et de 5.7 à 6.0% de monoterpène.

De préférence, la masse totale de henné naturel infusé, c'est-à-dire utilisé pour l'infusion, est inférieure à 10%, avantageusement inférieure à 8%, et de manière encore plus préférée inférieure à 6% du poids total de la composition. Les inventeurs ont constaté de manière inattendue que les substances infusées à partir de henné naturel, en particulier dans ces gammes de concentration, démontrent une synergie d'action avec les dérivés de terpène pour l'effet herbicide.

De préférence, l'oxyde terpénique est le 1.8-cinéol ; les monoterpénols sont sélectionnés parmi le linalol, le terpinène-4-ol, l'alpha-terpinéol et le géraniol ; et les monoterpènes sont sélectionnés parmi l'alpha-pinène, le béta-pinène, un terpinène tel que le gamma-terpinène, le limonène, le sabinène et le paracymène.

De préférence, la composition d'herbicides selon la présente invention est préparée, en plus de l'infusion de henné naturel, à partir d'au moins trois huiles essentielles. Elle est avantageusement préparée à partir des trois huiles essentielles suivantes : l'huile essentielle d'eucalyptus radiée, avantageusement 40 à 46%, l'huile essentielle d'eucalyptus globulus, avantageusement 15 à 18%, et l'huile essentielle de saro, avantageusement 6 à 8% en poids par rapport à la composition totale obtenue. Ces huiles permettent d'obtenir des compositions comprenant les teneurs voulues en dérivés de terpènes.

La composition selon l'invention comprend également avantageusement un conservateur, de préférence l'acide salicylique dans une teneur de 10 à 30%. Alternativement (ou en combinaison) on utilise l'acide salicylique dans une teneur de 6 à 20%, de préférence de 8 à 15%, et avantageusement dans une teneur de 9 à 12%.

L'acide salicylique outre son rôle de conservateur est un médiateur chimique qui contribue à améliorer l'action systémique de la composition selon l'invention. Les acides phénoliques perturbent l'absorption minérale par la plante : l'acide salicylique inhibe l'absorption d'ions K⁺ dans les racines. Le degré d'inhibition dépend de la concentration d'acide phénolique et du pH. La diminution du pH entraine une augmentation de l'absorption des composés phénoliques et donc de l'inhibition. Cette perturbation est due au fait que les acides phénoliques dépolarisent le potentiel membranaire des cellules racinaires ce qui modifie la perméabilité membranaire et ainsi le taux d'effluve d'ions aussi bien des anions que des cations. L'étendue de la dépolarisation croît avec l'augmentation de la concentration des acides phénoliques. Les inventeurs ont montré que cet effet est d'autant plus surprenant lorsqu'on utilise l'acide salicylique.

La composition selon l'invention comprend un tensio-actif non-ionique. Un tel tensio-actif non-ionique est utile afin de solubiliser toutes les substances terpéniques ou les huiles dans l'eau, on utilise de préférence un tensioactif sélectionné parmi les esters de sucres (qui sont des esters issus de la condensation de sucres et d'acides gras). On utilise de manière avantageuse au moins un polysorbate, au moins un ester de sorbitan et/ou un capryl glucoside. Ces tensioactifs présentent l'avantage d'être préparés à partir de substances d'origines naturelles, issues de ressources renouvelables et biodégradables.

La composition selon l'invention comprend aussi, de préférence, un agent de texture émulsifiant qui améliore l'adhérence de la solution sur les végétaux. Avantageusement, l'agent de texture est de la gomme arabique, de préférence dans une teneur de 3 à 15%, de manière plus préférée de 6 à 12%, voire même 7 à 10%.

Toutes les combinaisons des plages de valeur données précédemment dans le cadre de la présente invention sont également possibles.

La composition se présente avantageusement sous forme d'une solution pulvérisable pour permettre de traiter facilement les végétaux. Lorsqu'elle contient un agent de texture émulsifiant, la solution selon l'invention permet une pulvérisation propre, étant donné que cet agent améliore l'adhérence de la solution pulvérisée sur la végétation : la solution n'est pas redistribuée immédiatement dans les sols et elle s'évapore moins facilement.

Selon un autre aspect, la présente invention concerne une utilisation de la composition telle que décrite précédemment dans le cadre de la présente invention après dilution dans de l'eau pour éradiquer les mauvaises herbes de manière préventive ou curative. La dilution est de préférence de 10 à 30%, et avantageusement de 15 à 25% de la composition selon l'invention complétée avec de l'eau pour atteindre les 100% en poids.

### PARTIE EXPERIMENTALE

### 1) Préparation de l'infusion de henné naturel

200 g d'extrait sec de henné naturel en poudre sont infusés dans 2 litres d'eau portée à 70 - 80°C pendant 6 minutes. On laisse ensuite revenir la solution à température ambiante, puis on filtre éventuellement pour éliminer les résidus solides.

On obtient 1.25 litres d'une infusion utile qui peut conserver ses propriétés pendant 72 heures sans conservateurs à une température de 5 à 20°C à l'abri de la lumière.

### 2) Composition chimique des huiles essentielles

Les tableaux 1, 2 et 3 reportent l'analyse chimique des terpènes effectuée sur les huiles essentielles utilisées pour préparer la composition selon l'invention.

Ces analyses sont effectuées par chromatographie :
Chromatographie en phase liquide (CPL) pour le dosage des composés organiques (les solvants et composés volatils ont été dosés par Chromatographie en phase gazeuse HEAD -SPACE).

**Tableau 1 huile essentielle d'eucalyptus radié :**

| | | |
|---|---|---|
| oxydes terpéniques | 1.8 - cinéole | 72.51% |
| monoterpénols 12.6% | alpha-terpinéol | 10.17% |
| | terpinène-4-ol | 1.52% |
| | linalol | 0.45% |
| | géraniol | 0.46% |

**Tableau 2 huile essentielle d'eucalyptus globulus :**

| | | |
|---|---|---|
| oxydes terpéniques | 1.8 - cinéole | 66.46% |
| monoterpénes 20.39% | alpha-pinène | 15.89% |
| | limonène | 2.10% |
| | béta-pinène | 0.47% |
| | paracymène | 1.93% |

**Tableau 3 huile essentielle de saro :**

| | | |
|---|---|---|
| oxydes terpéniques | 1.8 - cinéole | 50.05% |
| monoterpénes 28.22% | alpha-pinène | 5.12% |
| | sabinène | 8.18% |
| | béta-pinène | 8.02% |
| | limonène | 4.27% |
| | gamma-terpinène | 2.63% |
| monoterpénols 5.42% | terpinène-4-ol | 3.62% |
| | linalol | 0.70% |
| | Alpha-terpinéol | 1.10% |

### 3) Données physico-chimiques sur le tensio-actif non ionique :

### Description :

| | |
|---|---|
| Apparence | Liquide |
| Couleur | <3.0 VCS-transparent incolore à jaune pâle |
| Dosage et application | tensioactif non ionique solubilisant idéal pour les formules nettoyantes |
| Composition | tensioactif non ionique obtenu à partir d'alcools gras et de glucose d'origine végétale. |

### Données techniques :

| | |
|---|---|
| pH/PH : | (5.5 à 6.0) |
| Viscosité : | à 25°C : 700-1100 mPa.s |
| Matière sèche (%) | (58 à 62) |
| Conservateur : | Aucun |
| Point éclair°C(en cuve close) | >100 |
| Masse volumique | 1.150g/cm3 à 20°C |
| Solubilité | Soluble dans l'eau froide |

Autres tensioactifs non ioniques utilisables dans la composition herbicide, sélectionnés parmi les esters de sucres : au moins un polysorbate, au moins un ester de sorbitan et/ou un capryl glucoside.

### 4) Préparation de la composition herbicide

Trois compositions sont préparées à partir des ingrédients suivant qui sont mélangés afin d'obtenir la composition herbicide :

### Composition 1

infusion de henné naturel 15-16%, acide salicylique 10-11%, tensioactif non ionique (ester de sucre) 7-8%, huile essentielle d'eucalyptus radié 40-41%, huile essentielle d'eucalyptus globulus 15-16%, huile essentielle de saro 6-7% et gomme arabique 4%

### Composition 2

L'infusion varie par rapport à la composition 1 uniquement par la teneur en acide salicylique qui est de 6-7% (on complète avec de l'eau pour obtenir les 100%)

### Composition 3

L'infusion varie par rapport à la composition 1 uniquement par la teneur en acide salicylique qui est de 0% (on complète avec de l'eau pour obtenir les 100%)

### 5) Mesure de l'efficacité de la composition selon l'invention comparé à d'autres compositions :

Les applications foliaires se font à partir de l'ensemble de la composition selon l'invention décrite au point 4) de la présente partie expérimentale, qui est dilué à 20% en poids. Ces applications ont été réalisées par pulvérisation sur une végétation sèche durant toute la saison et dans les conditions agro-climatiques normales :
- Températures comprises entre 14°C et 22°C ;
- Hygrométrie de 50% à 70% ; et
- En l'absence de précipitations au cours des 3h qui suivaient les applications.

Les plantes traitées sont des dicotylédones et des chardons à différents stades de leur développement : rosette, plantule et en phase de croissance.

Le tableau reporté ci-dessous montre l'efficacité des compositions selon l'invention (1, 2 et 3 ; se reporter à la partie 4)) comparées à des compositions témoins (5, 6, 7, 8 et 9) qui comportent les mêmes teneurs pondérales en tensioactif non ionique (ester de sucre), en huile essentielle d'eucalyptus radié, en huile essentielle d'eucalyptus globulus, en huile essentielle de saro et en gomme arabique. On a fait uniquement varier les teneurs en henné naturel et en acide salicylique, et complété le cas échéant avec de l'eau pour atteindre les 100% :

| | 1 | 2 | 3 | 4 | 5 | 6 | 7 | 8 | 9 |
|---|---|---|---|---|---|---|---|---|---|
| Teneur en Henné (en % pondéral avant dilution à 20%) | 15 | 15 | 15 | 0 | 10 | 20 | 0 | 0 | 0 |
| Teneur en acide salicylique (en % pondéral avant dilution à 20%) | 0 | 6 | 11 | 0 | 0 | 0 | 6 | 11 | 15 |
| Taux maximum de destruction des végétaux | 40 | 80 | 100 | 20 | 30 | 40 | 40 | 60 | 60 |
| Temps nécessaire en jours pour atteindre le taux maximum de destruction des végétaux | 12 | 16 | 16 | 12 | 16 | 12 | 16 | 12 | 12 |

### Remarques :

- Pour la composition 1, après 12 jours il n'y a plus d'évolution :
   -> 40% des dicotylédones sont détruites au stade plantule.
   -> les jeunes pousses de chardons sont détruites alors que les chardons développés repartent en végétation 15 jours après l'application.
- Pour la composition 2, à 12 jours on a déjà 78% de destruction des végétaux :
   -> 80% des dicotylédones au stade jeune et développé sont détruites.
   -> Les graminées : ray grass - pâturin annuel - fétuques au stade jeune sont détruites à 75%.
   -> Les jeunes chardons sont détruits ; le système foliaire des chardons est détruit à 90% au cours des 10 jours qui suivent l'application.
- Pour la composition 3, à 12 jours on a déjà 95% de destruction des végétaux :
   -> Les dicotylédones au stade plantule et développé sont détruits à 100%.
   -> Les graminées en croissance sont détruites à 100%.
   -> Les chardons en croissance et en floraison sont détruits à 100%.
- Pour la composition 4 :
   -> Seules 20% des dicotylédones sont détruites au stade plantule.
   -> Tous les chardons quelque soit leur stade végétatif résistent et repartent en végétation 15 jours après l'application.
- Pour la composition 5 :
   -> 30% des dicotylédones sont détruites au stade plantule.
   -> Les jeunes pousses de chardons sont détruites alors que les chardons développés repartent en végétation 15 jours après l'application.
- Pour la composition 6 :
   -> 40% des dicotylédones sont détruites au stade plantule.
   -> Les jeunes pousses de chardons sont détruites alors que les chardons développés repartent en végétation 15 jours après l'application.
- Pour la composition 7 :
   -> 40% des dicotylédones sont détruites au stade plantule.
   -> Les jeunes chardons sont détruits ; le système foliaire des chardons est détruit à 80% au cours des 10 jours qui suivent l'application.
- Pour la composition 8 :
   -> 60% des dicotylédones sont détruites au stade plantule.
   -> Les jeunes chardons sont détruits ; le système foliaire des chardons est détruit à 80% au cours des 10 jours qui suivent l'application.
- Pour la composition 9 :
   -> 60% des dicotylédones sont détruites au stade plantule.
   -> Les jeunes chardons sont détruits ; le système foliaire des chardons est détruit à 80% au cours des 10 jours qui suivent l'application.

### Conclusion :

Le seul apport de monoterpène assure un taux de destruction de 20%.

L'intégration exclusive d'extraits de Henné concentré à 10% permet d'obtenir un taux d'efficacité de 30% alors qu'intégré à 15%, le taux de destruction se situe à 40%, soit une amélioration d'efficacité herbicide de 10%. Intégré à 20%, les résultats sont identiques à la concentration de 15%.

L'intégration exclusive de l'acide salicylique concentré à 6% permet d'obtenir un taux d'efficacité de 40% alors qu'intégré à 11%, le taux de destruction se situe à 60% soit une amélioration d'efficacité herbicide de 20%. L'augmentation du taux de l'acide salicylique de 11% à 15% n'est pas justifiée : la concentration optimale de l'acide salicylique dans la formule concentré est de 11%.

On constate ainsi qu'augmenter les concentrations en Henné ou en acide salicylique, lorsqu'ils sont mis l'un sans l'autre dans la composition, ne permet pas d'obtenir des taux de destruction supérieurs à 60%.

L'intégration d'extraits de Henné à 15% et de l'acide salicylique à 6% permet d'obtenir une efficacité de 80% pour les dicotylédones et 75% pour les graminées.

L'intégration d'extraits de Henné à 15% et de l'acide salicylique à 11% permet d'obtenir une efficacité de 100%. La totalité des plantes sont détruites.

On voit bien l'effet synergique de la combinaison Henné / acide salicylique en présence des dérivés de terpènes tels que décrits précédemment.

## Revendications

1. Composition herbicide pour un désherbage total des zones non agricoles, contenant une infusion aqueuse de plante de henné naturel dans une teneur de 14 à 18% exprimée en pourcentage massique par rapport au poids total de la composition, au moins un tensio-actif non ionique, et comprenant en outre les ingrédients suivants :
| | |
|---|---|
| au moins un oxyde terpénique | 40 à 50% |
| au moins un monoterpénol | 5 à 9% |
| au moins un monoterpène | 4 à 8% ; |
et
tel que la masse de henné naturel solide utilisé pour l'infusion représente au moins 2%.

2. Composition selon la revendication 1, **caractérisée en ce qu'**elle comprend les ingrédients suivants dans les teneurs :
| | |
|---|---|
| au moins un oxyde terpénique | 43.0 à 48.5% |
| au moins un monoterpénol | 6.3 à 7.1% |
| au moins un monoterpène | 5.5 à 6.2%. |

3. Composition selon l'une des revendications qui précèdent, **caractérisée en ce que** l'oxyde terpénique est le 1.8-cinéol; les monoterpénols sont sélectionnés parmi le linalol, le terpinène-4-ol, l'alpha-terpinéol et le géraniol ; et les monoterpènes sont sélectionnés parmi l'alpha-pinène, le béta-pinène, un terpinène tel que le gamma-terpinène, le limonène, le sabinène et le paracymène.

4. Composition selon l'une des revendications qui précèdent, **caractérisée en ce qu'**elle est préparée, en plus de l'infusion de henné naturel, à partir d'huile essentielle d'eucalyptus radiée, d'huile essentielle d'eucalyptus globulus, et d'huile essentielle de saro.

5. Composition selon l'une des revendications précédentes, **caractérisée en ce qu'**elle contient 10 à 30% d'acide salicylique.

6. Composition selon l'une des revendications précédentes, **caractérisée en ce que** le tensioactif non ionique est sélectionné parmi les esters de sucres.

7. Composition selon l'une des revendications précédentes, **caractérisée en ce qu'**elle comprend en outre un agent de texture émulsifiant, de préférence la gomme arabique.

8. Utilisation de la composition selon l'une des revendications précédentes après dilution dans de l'eau pour éradiquer les mauvaises herbes de manière préventive ou curative.

## Patentansprüche

1. Herbizide Zusammensetzung für die Totalunkrautbekämpfung von landwirtschaftlichem Nichtkulturland, enthaltend eine wässrige Infusion von natürlichen Hennapflanzen mit einem Gehalt von 14 bis 18%, ausgedrückt als Gewichtsprozentsatz in Bezug auf das Gesamtgewicht der Zusammensetzung, mindestens ein nichtionisches Tensid und weiterhin umfassend die folgenden Bestandteile:
| | |
|---|---|
| mindestens ein Terpenoxid | 40 bis 50% |
| mindestens ein Monoterpenol | 5 bis 9% |
| mindestens ein Monoterpen | 4 bis 8%; |
und so, dass das Gewicht an festem natürlichem Henna, das für die Infusion verwendet wird, mindestens 2% ausmacht.

2. Zusammensetzung nach Anspruch 1, **dadurch gekennzeichnet, dass** sie die folgenden Bestandteile mit den folgenden Gehalten umfasst:
| | |
|---|---|
| mindestens ein Terpenoxid | 43,0 bis 48,5% |
| mindestens ein Monoterpenol | 6,3 bis 7,1% |
| mindestens ein Monoterpen | 5,5 bis 6,2%. |

3. Zusammensetzung nach einem der vorhergehenden Ansprüche, **dadurch gekennzeichnet, dass** es sich bei dem Terpenoxid um 1,8-Cineol handelt; dass die Monoterpenole aus Linalool, Terpinen-4-ol, alpha-Terpineol und Geraniol ausgewählt sind; und dass die Monoterpene aus alpha-Pinen, beta-Pinen, einem Terpinen wie gamma-Terpinen, Limonen, Sabinen und Paracymen ausgewählt sind.

4. Zusammensetzung nach einem der vorhergehenden Ansprüche, **dadurch gekennzeichnet, dass** sie zusätzlich zu der natürlichen Hennainfusion aus ätherischem Eucalyptus-radiata-Öl, ätherischem Eucalyptus-globulus-Öl und ätherischem Saro-Öl hergestellt ist.

5. Zusammensetzung nach einem der vorhergehenden Ansprüche, **dadurch gekennzeichnet, dass** sie 10 bis 30% Salicylsäure enthält.

6. Zusammensetzung nach einem der vorhergehenden Ansprüche, **dadurch gekennzeichnet, dass** das nichtionische Tensid aus den Zuckerestern ausgewählt ist.

7. Zusammensetzung nach einem der vorhergehenden Ansprüche, **dadurch gekennzeichnet, dass** sie weiterhin einen emulgierenden Strukturgeber, vorzugsweise Gummi arabicum, umfasst.

8. Verwendung der Zusammensetzung nach einem der vorhergehenden Ansprüche nach Verdünnung im Wasser zum präventiven oder kurativen Ausmerzen von Unkräutern.

## Claims

1. Herbicide composition for total weed control of nonagricultural areas, containing an aqueous infusion of natural henna plant at a content from 14 to 18% expressed as percentage by weight relative to the total weight of the composition, at least one nonionic surfactant, and further comprising the following ingredients:
| | |
|---|---|
| at least one terpene oxide | 40 to 50% |
| at least one monoterpenol | 5 to 9% |
| at least one monoterpene | 4 to 8%; |
and
such that the weight of solid natural henna used for the infusion represents at least 2%.

2. Composition according to Claim 1, **characterized in that** it comprises the following ingredients in the contents stated:
| | |
|---|---|
| at least one terpene oxide | 43.0 to 48.5% |
| at least one monoterpenol | 6.3 to 7.1% |
| at least one monoterpene | 5.5 to 6.2%. |

3. Composition according to either of the preceding claims, **characterized in that** the terpene oxide is 1,8-cineole; the monoterpenols are selected from linalool, terpinen-4-ol, alpha-terpineol and geraniol; and the monoterpenes are selected from alpha-pinene, beta-pinene, a terpinene such as gamma-terpinene, limonene, sabinene and para-cymene.

4. Composition according to one of the preceding claims, **characterized in that** it is prepared, in addition to natural henna infusion, from essential oil of Eucalyptus radiata, essential oil of Eucalyptus globulus, and saro essential oil.

5. Composition according to one of the preceding claims, **characterized in that** it contains 10 to 30% of salicylic acid.

6. Composition according to one of the preceding claims, **characterized in that** the nonionic surfactant is selected from the sugar esters.

7. Composition according to one of the preceding claims, **characterized in that** it further comprises an emulsifying texture agent, preferably gum arabic.

8. Use of the composition according to one of the preceding claims after dilution in water for eradicating weeds as a preventive or therapeutic measure.
